# EUROPEAN PATENT APPLICATION

(11) **EP 4 517 579 A1**
(43) Date of publication of application: **05.03.2025**
(21) Application number: 23796873.0
(22) Date of filing: 28.04.2023
(51) Int. Cl.: G06K 7/00, G06F 3/06

(54) **MEMORY CARD READER EQUIPPED WITH DATA DELETION AND OPTIMIZATION FUNCTION**

(30) Priority: 28.04.2022 KR 20220001051 U; 19.10.2022 KR 20220134574
(71) Applicant: CFTEK Corp., Goyang-si Gyeonggi-do 10550 (KR)
(72) Inventor: KIM, Jeong Ki, Goyang-si Gyeonggi-do 10551 (KR)
(74) Representative: Cabinet Chaillot
(86) International application number: PCT/KR2023/005839
(87) International publication number: WO 2023/211232

(57) **Abstract**

Disclosed is a memory card reader equipped with a data deletion and optimization function. The memory card reader includes: a memory card connection part for connecting a memory card; a button part for selecting and executing a data deletion and optimization algorithm; a state display part for displaying the selected algorithm and an operation state; a processor part for deleting or optimizing data of the memory card according to the selected algorithm; and a computer connection part for connecting the memory card to a computer through the processor part. The above-mentioned memory card reader equipped with a data deletion and optimization function is advantageous in that more effective, easy, and quick deletion and optimization of data stored on the memory can be achieved by deleting data and directly changing data of the memory card according to an optimization algorithm by the processor part used in the present invention without connection with a computer.

## Description

### [Technical Field]

The present invention relates to a memory card reader equipped with a self-data deletion and optimization function, and more particularly, to a memory card reader equipped with a self-data deletion and optimization function in which a data deletion and optimization algorithm is added to firmware of a memory card reader and a button is added to a case of the memory card reader in order to delete or optimize data stored in a memory card so that data deletion and optimization algorithm selection and execution commands are performed by itself without connection with a computer.

### [Background Art]

A memory card is widely used as a storage device for a digital camera, has the same structure as a solid-state drive (SSD) for a computer, and has the same problems as a general SSD, and thus there is a problem in that, when the memory card is used for a long time, unused garbage data accumulates in its memory, which causes the speed of the memory card to slow down gradually. In order to solve this problem, a computer periodically perform an optimization function called "TRIM" in the operating system (OS), but in the case of a memory card used in a digital camera, because its format is different from that of a memory card for a computer, it has not been possible to use the TRIM function. For this reason, there are even cases where high-quality video recording with digital cameras is interrupted. In order to solve this problem, a method in which a memory card is connected to a computer through a memory card reader and all data remaining on the memory card is deleted using a program called "Low Format" has been used. However, this method has a disadvantage in that the data is transmitted to the memory card reader through the computer's Universal Serial Bus (USB) connection, and therefore takes a very long time depending on the memory card capacity and shortens the lifetime of the memory card. Accordingly, in the related art, the development of a technology for deleting and optimizing data of a memory card more easily and quickly is required.

Meanwhile, when the lifetime of a memory card falls below 50%, errors occur in cells or the writing speed of the memory card decreases rapidly, and it is not easy for a user to estimate or determine the remaining lifetime of the memory card in advance.

### (Related Art Documents)

(Patent Document 1) Patent Document 1: Korean Patent Application No. 2019-7020336 A
(Patent Document 2) Patent Document 2: Korean Patent Application No. 2021-0120694 B1
(Patent Document 3) Patent Document 3: Korean Patent Application No. 2012-0046951 B1
(Patent Document 4) Patent Document 4: Korean Patent Application No. 2014-0056816 A
(Patent Document 5) Patent Document 5: Chinese Patent Application No. 202354302 A
(Patent Document 6) Patent Document 6: United States Patent Application No. 08145891 B2
(Patent Document 7) Patent Document 7: Chinese Patent Application No. 1359071 A

### [Disclosure]

### [Technical Problem]

The present invention is directed to providing a function of deleting or optimizing data in a memory card after a data deletion and optimization algorithm is added to firmware of the memory card reader and then a button is added to a case of the memory card reader so that when deletion or optimization for the data in the memory card is required, a user can manipulate the button directly without connection with a computer to select a deletion and optimization algorithm.

### [Technical Solution]

One aspect of the present invention provides a memory card reader equipped with a self-data deletion and optimization function, which includes: a memory card connection part configured to connect a memory card; a button part configured to select and execute a data deletion and optimization algorithm; a state display part configured to display the selected data deletion and optimization algorithm and an operation state; a processor part configured to delete or optimize data in the memory card according to the selected data deletion and optimization algorithm; and a computer connection part configured to connect the memory card to a computer through the processor part.

Here, the processor part may perform: a first operation in which the memory card that requires data deletion or optimization is connected to the memory card connection part and then the data deletion and optimization algorithm is selected through the button part; a second operation in which the data deletion and optimization algorithm selected through the button part and the operation state are displayed; and a third operation in which deletion and optimization of data stored in the memory card are performed according to the data deletion and optimization algorithm selected through the button part.

Further, the deletion and optimization algorithm may be selected through the button part.

Another aspect of the present invention provides a memory card reader equipped with a self-data deletion and optimization function, which includes: a memory card interface module configured to perform interfacing with a memory card; an input module configured to receive a memory card format command for formatting the memory card or a memory card delete/optimize command for performing deletion/optimization on the memory card; a format execution module configured to execute formatting for the memory card according to the memory card format command received through the input module; and a data deletion/optimization module configured to delete and optimize data stored in a data storage area according to the memory card delete/optimize command input through the input module.

Here, the memory card reader may further include a host interface module configured to perform interfacing with a host terminal.

Further, the format execution module may be configured to receive the memory card format command from the host terminal through an interface with the host interface module and execute formatting for the memory card according to the received memory card format command.

Further, the data deletion/optimization module may be configured to receive the memory card delete/optimize command from the host terminal through an interface with the host interface module and delete and optimize the data stored in the data storage area according to the received memory card delete/optimize command.

Meanwhile, the memory card reader may further include: a memory card information storage module configured to, when the memory card is formed of a non-volatile memory express (NVMe) memory, receive self-monitoring, analysis and reporting technology (S.M.A.R.T) information related to data deletion/writing from the host terminal through the host interface module, and store the received S.M.A.R.T information; a memory card remaining lifetime automatic calculation module configured to calculate a remaining lifetime of the memory card using the S.M.A.R.T information stored in the memory card information storage module; and a memory card replacement time alarm module configured to generate an alarm for a replacement time of the memory card using the remaining lifetime of the memory card automatically calculated by the memory card remaining lifetime automatic calculation module and output the generated alarm through a display.

Further, the memory card reader may further include a data deletion/optimization count module configured to count the number of times the data is deleted/optimized according to the data deletion/optimization of the data deletion/optimization module.

Further, the memory card reader may further include a format execution module configured to receive the memory card format command from the host terminal through an interface with the host interface module and execute formatting for the memory card according to the received memory card format command, execute the formatting for the memory card according to the received memory card format command or the memory card format command received through the input module, and execute formatting for the memory card by separately specifying the data storage area, a memory card information storage area, and a memory card deletion/optimization storage area.

Further, the memory card information storage module may be configured to receive memory card information from the host terminal through an interface with the host interface module and store the memory card information.

Here, the memory card information automatic storage control module may perform control to receive the memory card information of the memory card from the host terminal through an interface with the host interface module and automatically store the received memory card information in the memory card information storage area.

Further, the memory card reader may further include the display configured to display the memory card information and the remaining lifetime of the memory card.

Further, the memory card reader may further include: a memory card automatic recognition module configured to automatically recognize the memory card information stored in the memory card information storage area and the number of times deletion/optimization is performed on the memory card, through an interface with the memory card interface module; and a memory card automatic identification module configured to search the memory card information stored in the memory card information storage module for the memory card information automatically recognized by the memory card automatic recognition module to automatically identify the memory card.

Further, the memory card remaining lifetime automatic calculation module may be configured to add the number of times the data is deleted/optimized that is counted by the data deletion/optimization count module to the number of times deletion/optimization is performed on the memory card that is automatically recognized by the memory card automatic recognition module to calculate a final number of times the data is deleted/optimized, automatically calculate the remaining lifetime of the memory card according to the calculated final number of times the data is deleted/optimized by referring to a storage method stored in the memory card information storage module, and output the calculated remaining lifetime of the memory card through the display.

Further, the memory card reader may further include: a memory card deletion/optimization count storage module in which the final number of times the data is deleted/optimized that is calculated by the memory card remaining lifetime automatic calculation module is stored; and a memory card deletion/optimization count automatic storage control module configured to control the final number of times the data is deleted/optimized that is stored in the memory card deletion/optimization count storage module to be automatically stored in the memory card deletion/optimization count area of the memory card through an interface with the memory card interface module.

### [Advantageous Effects]

A memory card reader equipped with a self-data deletion and optimization function described above can achieve deletion and optimization of data stored in a memory card more effectively, easily, and rapidly by directly changing, by a processor part, the data in the memory card according to a data deletion and optimization algorithm used in the present invention without connection with a computer.

Further, the memory card is formatted and optimized on the memory card reader, and thus it is possible to conveniently and stably maintain a writing operation speed of the memory card.

Further, when the memory card is formed of a non-volatile memory express (NVMe) memory, the memory card is configured to receive self-monitoring, analysis and reporting technology (S.M.A.R.T) information related to data deletion/writing from a host terminal and calculate and display the remaining lifetime, and thus it is possible to check the number of times deletion/writing is performed on the memory card in real time and check a current lifetime to accurately determine a replacement time of the memory card.

Further, the memory card reader is configured to cumulatively count the number of times data is deleted/optimized in the memory card and determine a remaining lifetime of the memory card in real time, and thus it is possible to predict a replacement time of the memory card to replace the memory card, and prevent memory card storage errors.

In particular, the memory card is configured to store the purpose and storage method of the memory card in the memory card by specifying the purpose and storage method of the memory card in advance, and thus it is possible to accurately determine the remaining lifetime of the memory card using the purpose and storage method of the memory card.

### [Description of Drawings]

FIG. 1 is a perspective view of a memory card reader equipped with a self-data deletion and optimization function according to an embodiment of the present invention.
FIG. 2 is a block diagram of a memory card reader equipped with a self-data deletion and optimization function according to a first embodiment of the present invention.
FIG. 3 is a flowchart illustrating an operation method of the memory card reader equipped with a self-data deletion and optimization function according to an embodiment of the present invention.
FIG. 4 is a block diagram of a memory card reader equipped with data optimization and lifetime prediction functions to which a lifetime display function is added according to a second embodiment of the present invention.
FIG. 5 is a block diagram of the memory card according to an embodiment of the present invention.

### [Modes of the Invention]

While the present invention is open to various modifications and alternative forms, specific embodiments thereof are shown by way of example in the accompanying drawings and will herein be described in detail. However, it should be understood that there is no intent to limit the present invention to the particular forms disclosed, and on the contrary, the present invention is to cover all modifications, equivalents, and alternatives falling within the spirit and scope of the present invention. Like reference numerals refer to like elements throughout the description of the drawings.

It will be understood that, although the terms "first," "second," etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any or all combinations of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

It will be understood that the terminology used herein is for the purpose of describing particular embodiments only and is not intended to be limiting to the present invention. As used herein, the singular forms "a" and "an" are intended to include the plural forms as well, unless the context clearly indicates otherwise. It will be further understood that the terms "comprise," "comprising," "include," and/or "including," when used herein, specify the presence of stated features, integers, steps, operations, elements, and/or components but do not preclude the presence or addition of one or more other features, integers, steps, operations, elements, components, and/or groups thereof.

Unless otherwise defined, all terms including technical and scientific terms used herein have the same meaning as commonly understood by one of ordinary skill in the art to which the present invention belongs. It should be further understood that terms, such as those defined in commonly used dictionaries, should be interpreted as having meanings that are consistent with their meanings in the context of the relevant art and are not to be interpreted in an idealized or overly formal sense unless expressly so defined herein.

Hereinafter, exemplary embodiments of the present invention will be described in detail with reference to the accompanying drawings.

Memory cards applicable to the present invention include a secure digital (SD) card, a micro SD card, a compact flash (CF) card, a CFexpress card, an XQD memory card, etc., and include algorithms such as DOD, RCMP, CSEC, US Army, US Air Force, British HMG IS5, Peter Gutmann, Russian Standard, NIST SP-800-88, Secure, Quick, Random Erase, etc.

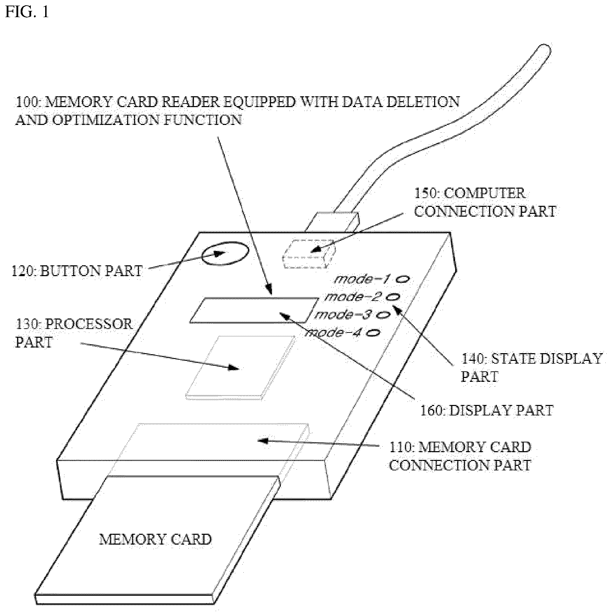

FIG. 1 is a perspective view of a memory card reader equipped with a self-data deletion and optimization function according to an embodiment of the present invention.

Referring to FIG. 1, as a first step, a user inserts a memory card that requires data deletion and optimization into the memory card reader equipped with a self-data deletion and optimization function.

As a second step, the user clicks a button mounted on the memory card reader equipped with a self-data deletion and optimization function to select an algorithm required for data deletion or optimization, and then presses and holds the button again or presses a separate execution button to run the selected algorithm.

Here, as the optimization algorithm, conventional algorithms, for example, U.S. DoD 5220.23-M(E), U.S. DoD 5220.23-M(ECE), German BCI/VSITR, Peter Gutmann, Bruce Schneier, Russian GOST R 50739-95, British HMG ISS(Baseline), British HMG ISS(Enhanced), NAVSO P-5239-26(MFM)/(RLL), Canadian RCMP TSSIT OPS-II US Army AR380-19, NATO Data Destruction Standard, MS Cipher, NSA erasure algorithm, Pfitzner, NCSC-TG-025, FSSI-5020, ISM 6.2.92, NZSIT 402, etc. may be used.

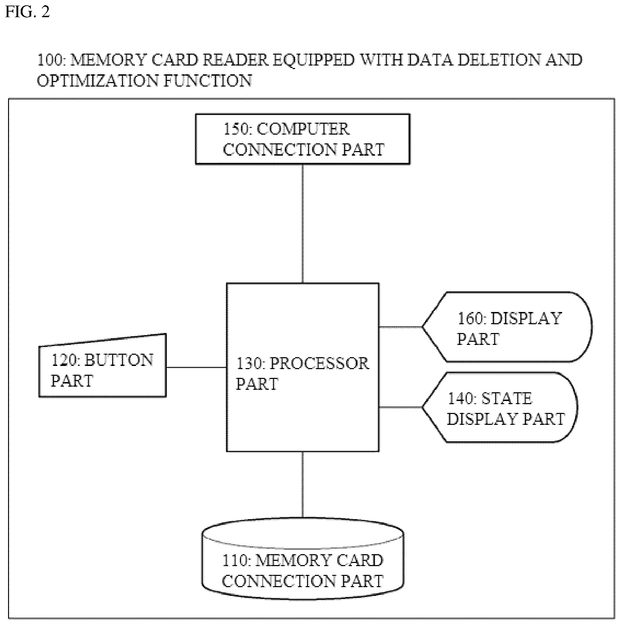

FIG. 2 is a block diagram of a memory card reader equipped with a self-data deletion and optimization function according to a first embodiment of the present invention.

Referring to FIG. 2, in the present invention, the memory card reader includes a memory card connection part 110 that electrically connects a memory card and a processor part 130, a button part 120 that selects a deletion and optimization algorithm and transmits an execution command to the processor part 130, a state display part 140 that displays the algorithm selected by the button part 120 and an operation state, the processor part 130 that deletes or optimizes data stored in the memory card connected to the memory card connection part 110 using the algorithm selected by the button part 120, and a computer connection part 150 that connects the memory card and a computer through the processor part 130.

The memory card connection part 110 electrically connects the memory card and the processor part 130.

The button part 120 may be electrically connected to the processor part 130 so that the processor part 130 may detect whether a button is pressed. The button part 120 may include a plurality of buttons for button selection of the processor part 130.

The state display part 140 is electrically connected to the processor part 130 and displays a signal output from the processor part 130 on a light-emitting diode (LED) screen or a liquid crystal display (LCD) screen.

The computer connection part 150 is electrically connected to the processor part 130.

The processor part 130 periodically checks the memory card connection part 110 and the button part 120 to identify whether the memory card is connected and whether the button of the button part 120 is pressed, outputs an algorithm selected by a user according to a determined rule and an operation state to the state display part 140, and when the execution command is detected through the button part 120, changes the content of the memory card mounted on the memory card connection part 110 using the selected algorithm. Further, the processor part 130 periodically checks the computer connection part 150, connects the memory card mounted on the memory card connection part 110 to a computer according to a command of the connected computer, and processes the memory card so that the computer can directly read from and write on the memory card.

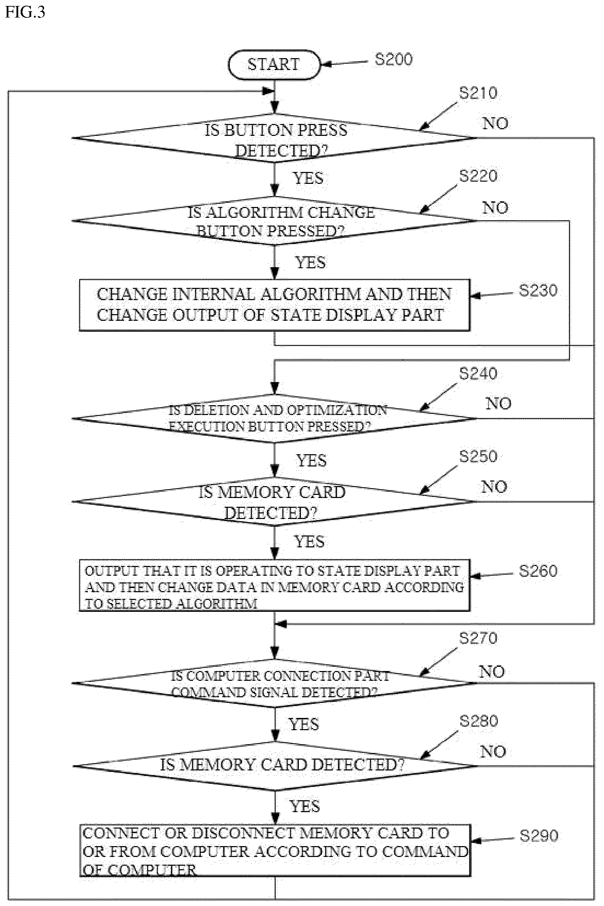

FIG. 3 is a flowchart illustrating an operation method of the memory card reader equipped with a self-data deletion and optimization function according to an embodiment of the present invention.

Referring to FIGS. 2 and 3, the processor part 130 of a memory card reader 100 equipped with a self-data deletion and optimization function periodically checks the memory card connection part 110, the button part 120, and the computer connection part 150, identifies whether a memory card is connected, whether a button is pressed, and whether a computer is connected, completes a task according to a determined rule, and displays a state of the task on the state display part 140 (S210).

The processor part 130 changes the data in the memory card according to a determined algorithm when the pressed state of the button part 120 corresponds to a data deletion and optimization execution command (S240).

The processor part 130 may connect or disconnect the computer to or from the memory card according to a command of the computer connected to the computer connection part 150 (S270).

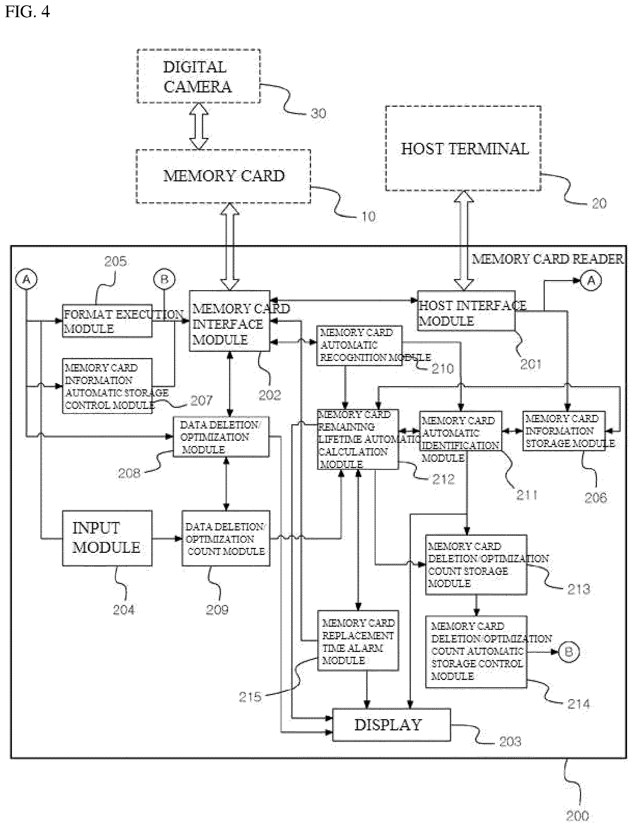

FIG. 4 is a block diagram of a memory card reader equipped with data optimization and lifetime prediction functions to which a lifetime display function is added according to a second embodiment of the present invention.

First, referring to FIG. 4, a memory card reader 200 may be configured to perform interfacing for accessing a memory card 10.

Further, the memory card 10 may be detachably attached to a digital camera 30 and include a nonvolatile memory device.

Further, a host terminal 20 may be configured to access the memory card 10 through the memory card reader 200. For example, the host terminal 20 may be a notebook computer, a personal computer (PC), etc.

Hereinafter, a detailed configuration of the memory card reader 200 will be described.

First, the memory card reader 200 may include a host interface module 201, a memory card interface module 202, a display 203, an input module 204, a format execution module 205, a memory card information storage module 206, a memory card information automatic storage control module 207, a data deletion/optimization module 208, a data deletion/optimization count module 209, a memory card automatic recognition module 210, a memory card automatic identification module 211, a memory card remaining lifetime automatic calculation module 212, a memory card deletion/optimization count storage module 213, a memory card deletion/optimization count automatic storage control module 214, and a memory card replacement time alarm module 215.

Hereinafter, detailed configurations thereof will be described.

The host interface module 201 may be configured to perform interfacing with the host terminal 20.

The memory card interface module 202 may be configured to perform interfacing with the memory card 10.

The display 203 may be configured to display memory card information and remaining lifetime of the memory card 10.

Here, the memory card information may include an identifier, a purpose, and a storage method of the memory card 10. The identifier is a configuration for identifying the memory card 10, and may be an ID, a name, an identification number, or the like. Further, the purpose is a configuration regarding whether it is for general data authoring or for use in the digital camera 30. Further, the storage method may be configured as one of a single level cell (SLC) method, a multi-level cell (MLC) method, and a triple level cell (TLC) method.

Such memory card information may be specified and set by the user.

The input module 204 may be configured to receive a memory card format command for formatting the memory card 10 or a memory card delete/optimize command for performing deletion/optimization on the memory card 10. The input module 204 may be configured as a separate button or the like on the memory card reader 200.

The format execution module 205 may be configured to receive a memory card format command from the host terminal 20 through an interface with the host interface module 201.

Further, the format execution module 205 may be configured to execute formatting for the memory card 10 according to the memory card format command received through the host interface module 201 or the memory card format command received through the input module 204.

In this case, the format execution module 205 may be configured to execute formatting for the memory card 10 by separately specifying a memory card information storage area 12 for storing the memory card information and a memory card deletion/optimization count storage area 13 for storing the number of times deletion/optimization is performed on the memory card in addition to a data storage area 11 for storing general data.

The memory card information storage module 206 may be configured to receive memory card information from the host terminal 20 through an interface with the host interface module 201 and store the memory card information. Memory card information on a plurality of memory cards 10 may be stored in the memory card information storage module 206.

The memory card information automatic storage control module 207 may perform control to receive the memory card information of the memory card 10 from the host terminal 20 through an interface with the host interface module 201, and allow the received memory card information to be automatically stored in the memory card information storage area 12.

The data deletion/optimization module 208 may be configured to receive the memory card delete/optimize command from the host terminal 20 through an interface with the host interface module 201.

Further, the data deletion/optimization module 208 may be configured to delete and optimize the data stored in the data storage area 11 according to the received memory card delete/optimize command or the memory card delete/optimize command input through the input module 204.

In this case, optimization may be performed using various optimization algorithms, and one optimization algorithm selected from among several optimization algorithms may be used.

For example, the so-called 3Pass method of the US Department of Defense (DoD) is configured to overwrite data three or more times when deleting data. The so-called 3Pass method is configured to write 0 on the entire memory card 10, rewrite with 1, and then rewrite with random characters. The user may select and use the most appropriate deletion/optimization algorithm as necessary.

The data deletion/optimization count module 209 may be configured to count the number of times the data is deleted/optimized according to the data deletion/optimization of the data deletion/optimization module 208.

The memory card automatic recognition module 210 may be configured to automatically recognize the memory card information stored in the memory card information storage area 12 and the number of times deletion/optimization is performed on the memory card that is stored in the memory card deletion/optimization count storage area 13 through an interface with the memory card interface module 202. Here, the memory card information and the number of times deletion/optimization is performed on the memory card may be prestored in the corresponding area by the memory card reader 200.

The memory card automatic identification module 211 may be configured to search the memory card information stored in the memory card information storage module 206 for the memory card information automatically recognized by the memory card automatic recognition module 210 to automatically identify the memory card 10. The memory card automatic identification module 211 may identify the corresponding memory card 10 using the identifier among the memory card information.

The memory card remaining lifetime automatic calculation module 212 may be configured to add the number of times deletion/optimization is performed on the memory card that is counted by the data deletion/optimization count module 209 to the number of times the data is deleted/optimized that is automatically recognized by the memory card automatic recognition module 210 to calculate the final number of times the data is deleted/optimized.

Here, when the memory card 10 is formed of an NVMe memory, the memory card remaining lifetime automatic calculation module 212 may be configured to extract information related to data deletion and writing from an existing self-monitoring, analysis and reporting technology (S.M.A.R.T) device to determine the final number of times the data is deleted/optimized in the memory card.

Further, the memory card remaining lifetime automatic calculation module 212 may be configured to automatically calculate a remaining lifetime of the memory card 10 according to the final number of times the data is deleted/optimized by referring to the storage method stored in the memory card information storage module 206 and output the calculated remaining lifetime of the memory card 10 through the display 203.

Here, when the storage method of the memory card 10 is an SLC, the average number of times the data can be deleted may be up to 100,000, when the storage method of the memory card 10 is an MLC, the average number of times the data can be deleted may be up to 10,000, and when the storage method of the memory card 10 is a TLC, the average number of times the data can be deleted may be up to 1,000.

Accordingly, the remaining lifetime may be automatically calculated by subtracting the final number of times the data is deleted/optimized from the average number of times the data can be deleted according to the corresponding storage method of the memory card 10.

The memory card deletion/optimization count storage module 213 may be configured to store the final number of times the data is deleted/optimized that is calculated by the memory card remaining lifetime automatic calculation module 212.

The memory card deletion/optimization count automatic storage control module 214 may control the final number of times the data is deleted/optimized that is stored in the memory card deletion/optimization count storage module 213 to be automatically stored in the memory card deletion/optimization count storage area 13 of the memory card 10 through an interface with the memory card interface module 202.

The memory card replacement time alarm module 215 may be configured to generate an alarm for a replacement time of the memory card 10 using the remaining lifetime of the memory card 10 automatically calculated by the memory card remaining lifetime automatic calculation module 212 and output the alarm through the display 203 or a speaker (not illustrated). For example, the memory card replacement time alarm module 215 may be preset to generate the alarm for the replacement time when the remaining lifetime is 50% or less. When the remaining lifetime is 50% or less, errors occur in several cells of the memory card 10, which causes the writing speed of the memory card 10 to slow down exponentially, and thus the alarm for the replacement time may be generated when the remaining lifetime is 50% or less.

Further, when the memory card 10 has not been replaced in time and the remaining lifetime is 0 times, a memory card lock setting alarm module (not illustrated) may be configured to generate a lock setting alarm and transmit the generated lock setting alarm to the memory card 10 through the memory card interface module 202.

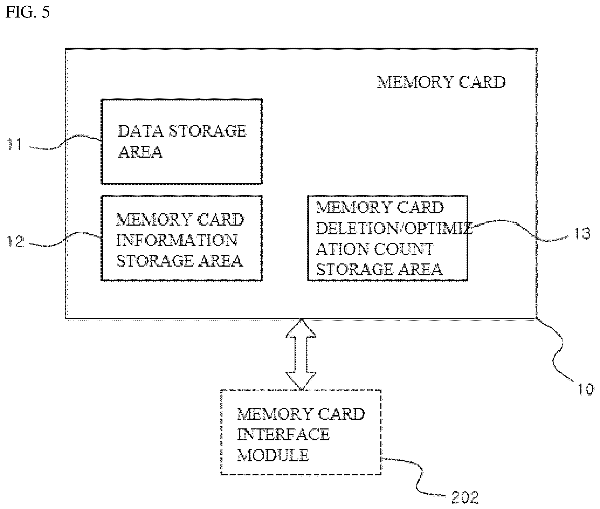

FIG. 5 is a block diagram of the memory card according to an embodiment of the present invention.

Referring to FIG. 5, the memory card 10 may include a data storage area 11, a memory card information storage area 12, and a memory card deletion/optimization count storage area 13.

Hereinafter, detailed configurations thereof will be described.

The data storage area 11 is an area in which data is stored.

The memory card information storage area 12 is an area in which memory card information is stored.

The memory card deletion/optimization count storage area 13 is an area in which the number of times deletion/optimization is performed on the memory card is stored.

Meanwhile, a memory card lock setting part (not illustrated) of the memory card 10 may be configured to receive the lock setting alarm through the memory card interface module 202 and perform lock switching to make the data storage area 11 inaccessible when the lock setting alarm is received. That is, when the remaining lifetime is 0 times, the digital camera 30 cannot access the data storage area 11 of the memory card 10 and an error message such as a recognition error of the memory card 10 may be output. Accordingly, the user may know that the memory card 10 that can no longer be used is mounted, and may immediately replace the memory card 10 with a new memory card 10 and use the replaced memory card 10.

While example embodiments of the present invention and their advantages have been described above in detail, it should be understood by those skilled in the art that various changes, substitutions and alterations may be made herein without departing from the scope of the invention as defined by the following claims.

## Claims

1. A memory card reader equipped with a self-data deletion and optimization function, comprising:
a memory card connection part configured to connect a memory card;
a button part configured to select and execute a data deletion and optimization algorithm;
a state display part configured to display the selected data deletion and optimization algorithm and an operation state;
a processor part configured to delete or optimize data in the memory card according to the selected data deletion and optimization algorithm; and
a computer connection part configured to connect the memory card to a computer through the processor part.

2. The memory card reader of claim 1, wherein the processor part performs:
a first operation in which the memory card that requires data deletion or optimization is connected to the memory card connection part and then the data deletion and optimization algorithm is selected through the button part;
a second operation in which the data deletion and optimization algorithm selected through the button part and the operation state are displayed; and
a third operation in which deletion and optimization of data stored in the memory card are performed according to the data deletion and optimization algorithm selected through the button part.

3. The memory card reader of claim 2, wherein the data deletion and optimization algorithm is selected through the button part.

4. A memory card reader equipped with data optimization and lifetime prediction functions, comprising:
a memory card interface module configured to perform interfacing with a memory card;
an input module configured to receive a memory card format command for formatting the memory card or a memory card delete/optimize command for performing deletion/optimization on the memory card;
a format execution module configured to execute formatting for the memory card according to the memory card format command received through the input module; and
a data deletion/optimization module configured to delete and optimize data stored in a data storage area according to the memory card delete/optimize command input through the input module.

5. The memory card reader of claim 4, further comprising a host interface module configured to perform interfacing with a host terminal,
wherein the format execution module is configured to receive the memory card format command from the host terminal through an interface with the host interface module and execute formatting for the memory card according to the received memory card format command, and
the data deletion/optimization module is configured to receive the memory card delete/optimize command from the host terminal through an interface with the host interface module and delete and optimize the data stored in the data storage area according to the received memory card delete/optimize command.

6. The memory card reader of claim 5, further comprising:
a memory card information storage module configured to, when the memory card is formed of a non-volatile memory express (NVMe) memory, receive self-monitoring, analysis and reporting technology (S.M.A.R.T) information related to data deletion/writing from the host terminal through the host interface module, and store the received S.M.A.R.T information;
a memory card remaining lifetime automatic calculation module configured to calculate a remaining lifetime of the memory card using the S.M.A.R.T information stored in the memory card information storage module; and
a memory card replacement time alarm module configured to generate an alarm for a replacement time of the memory card using the remaining lifetime of the memory card automatically calculated by the memory card remaining lifetime automatic calculation module and output the generated alarm through a display.

7. The memory card reader of claim 4, further comprising a data deletion/optimization count module configured to count a number of times the data is deleted/optimized according to the data deletion/optimization of the data deletion/optimization module.

8. The memory card reader of claim 7, wherein the format execution module is configured to execute formatting for the memory card by separately specifying the data storage area, a memory card information storage area, and a memory card deletion/optimization storage area of the memory card.

9. The memory card reader of claim 6, wherein the memory card information storage module is configured to receive memory card information from the host terminal through an interface with the host interface module and store the memory card information, and
the memory card information automatic storage control module performs control to receive the memory card information of the memory card from the host terminal through an interface with the host interface module and automatically store the received memory card information in the memory card information storage area.

10. The memory card reader of claim 9, further comprising the display configured to display the memory card information and the remaining lifetime of the memory card.

11. The memory card reader of claim 10, further comprising:
a memory card automatic recognition module configured to automatically recognize the memory card information stored in the memory card information storage area and a number of times deletion/optimization is performed on the memory card, through an interface with the memory card interface module; and
a memory card automatic identification module configured to search the memory card information stored in the memory card information storage module for the memory card information automatically recognized by the memory card automatic recognition module to automatically identify the memory card.

12. The memory card reader of claim 11, wherein the memory card remaining lifetime automatic calculation module is configured to add the number of times the data is deleted/optimized that is counted by the data deletion/optimization count module to the number of times deletion/optimization is performed on the memory card that is automatically recognized by the memory card automatic recognition module to calculate a final number of times the data is deleted/optimized, automatically calculate the remaining lifetime of the memory card according to the calculated final number of times the data is deleted/optimized by referring to a storage method stored in the memory card information storage module, and output the calculated remaining lifetime of the memory card through the display.

13. The memory card reader of claim 12, further comprising:
a memory card deletion/optimization count storage module in which the final number of times the data is deleted/optimized that is calculated by the memory card remaining lifetime automatic calculation module is stored; and
a memory card deletion/optimization count automatic storage control module configured to control the final number of times the data is deleted/optimized that is stored in the memory card deletion/optimization count storage module to be automatically stored in the memory card deletion/optimization count area of the memory card through an interface with the memory card interface module.
